**Europäisches Patentamt**

**European Patent Office**

**Office européen des brevets**

(11) Publication number : **0 504 037 A2**

# (12) EUROPEAN PATENT APPLICATION

(21) Application number : **92400616.6**

(22) Date of filing : **10.03.92**

(51) Int. Cl.⁵ : **G03B 37/00**

(30) Priority : **11.03.91 JP 44832/91**

(43) Date of publication of application :
**16.09.92 Bulletin 92/38**

(84) Designated Contracting States :
**CH DE LI SE**

(71) Applicant : **Kabushiki Kaisha TOPCON**
**75-1, Hasunuma-cho Itabashi-ku**
**Tokyo (JP)**

(72) Inventor : **Nakamura, Shinichi, c/o Kabushiki**
**Kaisha Topcon**
**75-1, Hasunuma-cho**
**Itabashi-ku, Tokyo 174 (JP)**
Inventor : **Ohtomo, Fumio, c/o Kabushiki**
**Kaisha Topcon**
**75-1, Hasunuma-cho**
**Itabashi-ku, Tokyo 174 (JP)**

(74) Representative : **Mongrédien, André et al**
**c/o SOCIETE DE PROTECTION DES**
**INVENTIONS 25, rue de Ponthieu**
**F-75008 Paris (FR)**

(54) **Camera.**

(57)   A photographing lens system linear movement mechanism moves a photographing lens system 301 along its optical axis while maintaining its perpendicularity relative to an image plane and restraining variation of the position of a principal point as an intersection point between the optical axis of a photographing lens system 301 and the image plane. The principal distance measuring mechanism is for measuring a principal distance between the image plane and a principal plane of the photographing lens system 301. A photoelectric transfer portion 201 is disposed at a photographing portion and adapted to photoelectrically transfer a photographing image and output it. A display portion is for displaying an image in accordance with the output of the photoelectric transfer portion 201.

EP 0 504 037 A2

## BACKGROUND OF THE INVENTION

### Field of the Invention

This invention relates to a camera suitable for the use in photogrammetry.

### Brief Description of the Prior Art

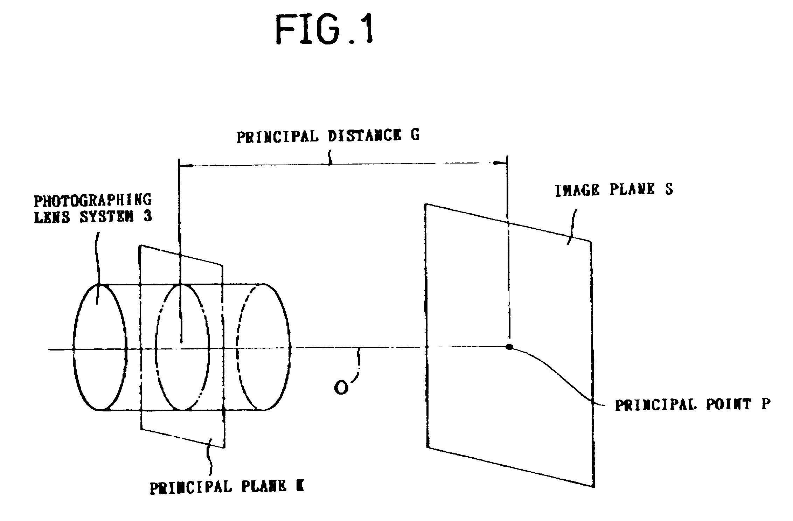

In photogrammetry, the position of a principal point P and a principal distance G (see Fig. 1) are required to be clear in order to interpret a photograph. The principal point P is defined as an intersection point between an optical axis O of a photographing lens system 301 and an image plane S. The principal distance G is defined as a distance between the image plane S and a principal plane K of the photographing lens system 301.

The conventional photogrammetric camera employs a fixed focus optical system in which the photographing lens system 301 is fixed relative to the image plane S in order to avoid variations in position of the principal point P and in the principal distance G. That is, the photogrammetric camera is designed such that no focusing is required as required in a commercially available camera. The position of the principal point P and the principal distance G of this photogrammetric camera are measured in a manufacturing process of the camera. These measured values are used when a photograph is interpreted. Conventionally, a picture photographing was performed in such a manner as to form an image on a dry plate or a film.

However, since the photogrammetric camera has a fixed focus, two cameras must be prepared: one for taking a long-range shot and the other for taking a short-range shot, for a terrestrial photogrammetry of an object in a long range as well as of an object in a short range, and the preparation is troublesome. A camera for general use which has a focusing function might be useful for the purpose. However, the position of the principal point P is extensively varied in accordance with a movement of the photographing lens system 301 in a direction of its optical axis and the principal distance G becomes unclear. Therefore, it is difficult to use a camera for general use for photogrammetry.

Moreover, since the conventional photogrammetric camera is designed such that an image is formed on a dry plate or a film, it has the shortcomings that the state of photography cannot be confirmed until it is developed. In addition, where digital data are required for photograph interpretation, it is required that an image is read using an image scanner or the like in order to effect an A/D conversion. Therefore, the image converting work is troublesome.

## SUMMARY OF THE INVENTION

The present invention has been made in view of the above situation. It is, therefore, a first object of the present invention to provide a camera, in which focusing can be effected without jeopardizing accuracy of image interpretation.

A second object of the present invention is to provide a camera, in which an image can be digitized and displayed.

In order to achieve the above objects, a camera according to the present invention includes a photographing lens system linear movement mechanism adapted to linearly move a photographing lens system along an optical axis thereof while maintaining its perpendicularity relative to an image plane and restraining variation of position of a principal point which is defined as an intersection point between the optical axis of the photographing lens system and the image plane, a principal distance measuring mechanism adapted to measure a principal distance between the image plane and a principal plane of the photographing lens system, a photoelectric transfer portion disposed at a photographing portion and adapted to photoelectrically transfer an image and output the same, and a display portion adapted to display an image in accordance with the output of the photoelectric transfer portion.

According to the camera of the present invention, focusing can be effected by linearly moving the photographing lens system. In this case, although the photographing lens system is linearly moved. the position of the principal point is hardly varied because the photographing lens system is linearly moved along the optical axis thereof while restraining the variation of the position of the principal point and maintaining the perpendicularity of the optical axis relative to the image plane. Furthermore, photographic interpretation is easy because the principal distance between the principal plane of the photographing lens system and the image plane can be obtained by the principal distance measuring mechanism.

## BRIEF DESCRIPTION OF THE DRAWINGS

Fig. 1 is an explanatory view of a principal distance.

Fig. 2 is a perspective view showing an important portion of a camera embodying the present invention.

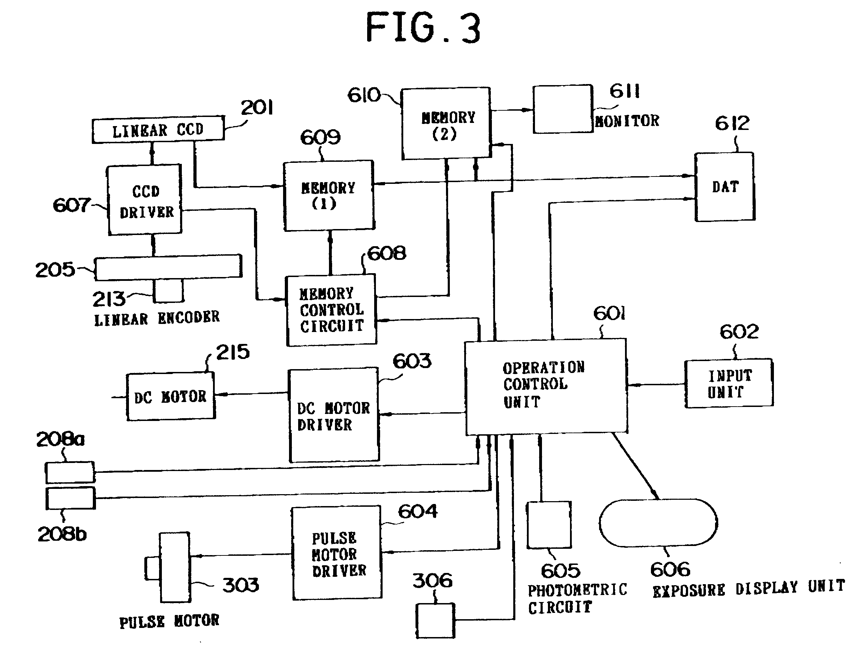

Fig. 3 is a block diagram of an electric system embodying the present invention.

## DETAILED DESCRIPTION OF THE PREFERRED EMBODIMENT

(Mechanical Constitution of Camera Body)

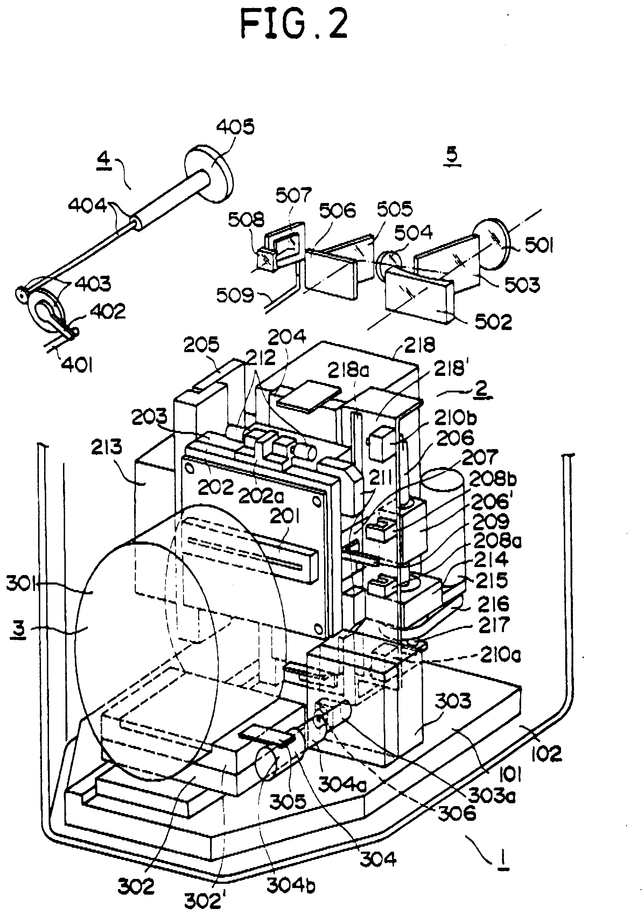

Referring first to Fig. 2, the numeral 1 denotes a camera body, which has a casing 102 and a mounting base 101. The camera body 1 generally comprises an imaging portion 2, a photographing lens system 3, a diaphragm mechanism 4, and a finder 5.

The imaging portion 2 has a base 218. This base 218 stands upright on the mounting base 101. A DC motor 215 is mounted to a rear part of the base 218. A bearing portion 214 is disposed at one side portion of the base 218. A ball screw 206 is rotatably carried on the bearing portion 214. The bearing portion 214 is adapted to prevent the play of the ball screw 206 in the axial direction. An output shaft (not shown) of the DC motor 215 and the ball screw 206 are linked with a steel belt 216. An idler 217 is disposed at the base 218. The idler 217 is adapted to remove the flexure of the steel belt 216.

A mounting plate 218' stands upright on one side portion of the base 218 and in parallel relation with the ball screw 206. Limit switches 210a, 210b are vertically spacedly mounted on the mounting plate 218'. Photo-interrupters 208a, 208b are spacedly disposed at the mounting plate 218'. The photo-interrupters 208a, 208b are located between the limit switches 210a, 210b. A guide groove 218a is formed in the mounting plate 218' and extends in the vertical direction. This guide groove 218a is provided to guide a plate spring 207 of which function will be described hereinafter.

A high accuracy linear guide 204 is disposed at a front portion of the base 218. This linear guide 204 extends in a vertical direction. A uniaxial stage 203 is slidably disposed at the linear guide 204. A movable member 206' is threadedly engaged with the ball screw 206. One end portion of the plate spring 207 is mounted on the movable member 206'. The plate spring 207 penetrates the guide groove 218. The other end portion of the plate spring 207 is mounted on the uniaxial stage 203. Upon rotation of the ball screw 206, the movable member 206' is vertically moved. The vertical movement of the movable member 206' is transmitted to the uniaxial stage 203. By this, the uniaxial stage 203 is slid upward and downward (in the vertical direction) with respect to the linear guide 204. Arrangement being such that the sliding direction of this uniaxial stage 203 corresponds to an auxiliary scanning direction. The plate spring 207 transmits driving force of the ball spring 206 to the uniaxial stage 203 while maintaining accuracy of the feeding operation of the linear guide 204.

Pusher members 211, 211 are vertically spacedly disposed at one side portion of the uniaxial stage 203.

A shading plate 209 is mounted between the pusher members 211, 211. The pushers members 211, 211 are engageable with the limit switches 210a, 210b. The pusher members 211, 211 are operated to prevent runaway of the uniaxial stage 203 in cooperation with the limit switches 210a, 210b. The shading plate 209 determines a stroke of movement of the uniaxial stage 203 in cooperation with the photo-interrupters 208a, 208b.

A CCD mounting base 202 is disposed at a front portion of the uniaxial stage 203. A linear CCD 201 as a photoelectric transfer portion is disposed at a front surface of the base 202. The linear CCD 201 extends in a horizontal direction (lateral direction). Inclined adjust screws 212, 212 are disposed at an upper portion of the uniaxial stage 203. An engaging member 202a is disposed at an upper portion of the CCD mounting base 202. By adjusting the inclined adjust screws 212, 212, the CCD mounting base 202 is adjusted in inclination relative to the uniaxial stage 203 within a range of micro-angle. By this, perpendicularity of the linear CCD 201 can be easily adjusted with respect to the secondary scanning direction. In this embodiment, the linear CCD 201 has square image elements. The number of the image elements of the linear CCD 201 is, for example, 4000.

A head 213 is disposed at the other side portion of the base 218. The head 213 forms a part of a linear encoder. A scale 205 of the linear encoder is mounted on the other side portion of the uniaxial stage 203. The head 213 is operated to read a position of the uniaxial stage 203 in the vertical direction. A spring, not shorn, is disposed at the base 218. This spring is balanced with the weight of the uniaxial stage 203. Since the secondary scanning direction corresponds to a vertical direction in this embodiment, a photographing time becomes short. The reason is that the length of the vertical direction of the image plane is short relative to that of the lateral direction.

The photographing lens portion 3 has a high accuracy linear guide 302. This linear guide 302 forms a part of a photographing lens system linear movement mechanism. The linear guide 302 is disposed at the mounting base 102. An uniaxial stage 302' is slidably disposed at the linear guide 302. A photographing lens system 301 is mounted on the uniaxial stage 302'. The photographing lens system 301 is correctly movable in a perpendicular direction with respect to a scanning plane of the linear CCD 201. In this embodiment, parallelism of the linear guide 302 relative to the optical axis of the photographing lens 301 is such machined and adjusted that a desired accuracy is obtained merely by assembling various component parts. Perpendicularity of the scanning plane of the linear CCD 201 relative to the linear guide 302 is also such machined and adjusted that a desired accuracy can be obtained merely by assembling the various component parts.

A pulse motor 303 is disposed at the base 101.

Driving force of the pulse motor 303 is transmitted to a micrometer type feeder device 304. The feeder device 304 comprises a screw 304a and a nut 304b. The screw 304a is directly connected to an output shaft 303a of the pulse motor 303. One end portion of the plate spring 305 is mounted on the nut 304b. The other end portion of the plate spring 305 is mounted on the uniaxial stage 302'. The plate spring 305 is adapted to slide the uniaxial stage 302' while maintaining the accuracy of the high accuracy linear guide 302.

In this invention, the feeder device 304 is of a backlashless structure. This feeder device 304 advances straight by 0.5mm per each rotation. The pulse motor 303 steps 200 times per each rotation. Accordingly, the feeder device 304 feeds a photographing lens of the photographing lens portion 3 by 2.5 $\mu$ m per each step.

A high accuracy origin switch 306 is mounted on the mounting base 101. The origin switch 306 determines an origin position of the photographing lens system 301. This origin switch 306 ensures a reproduction of a position at an accuracy of 1 $\mu$ m. This origin switch 306, together with the pulse motor 303, forms a principal distance measuring mechanism. By this, variation of the position of the principal point P caused by focusing operation of the photographing lens system 301 becomes one image element or less.

The requirement of keeping the variation of the position of the principal point P to one image element or less is arisen in view of photographic interpretation in this embodiment. The photographing lens system 301 is moved in such a manner as to keep the variation of the position of the principal point P to one image element or less.

Measurement of the principal distance G is effected by counting and calculating the number of rotation of the pulse motor 303. The principal distance G is found as a distance from the origin which is detected by the origin switch 306 with reference to the number of revolution of the pulse motor 303.

The diaphragm mechanism 4 generally comprises an adjusting dial 405, a spline type extension bar 404, a rotary transmission mechanism 403, and a lever 402. The lever 402 is connected to an iris diaphragm (not shown) disposed at the photographing lens system 301 through a diaphragm variable claw 401. When the adjusting dial 405 is operated, the diaphragm adjustment is effected. The iris diaphragm can be adjusted without directly touching the photographing lens system 301. Therefore, accuracy of the linear guide 302 can be maintained.

In this embodiment, the finder 5 is a lighting bright frame finder. The finder 5 is attached to an upper portion of the casing 102. The finder 5 has a diopter adjustable eye piece 501, an objective lens 502, a half mirror 503, an adjusting lens 504, a half mirror 505, a lighting window 506, a rotary mirror 507, an objective mirror 508, and a connection bar 509. The half mirror 503 is disposed between the objective lens 502 and the eye piece 501. The adjusting lens 504 is disposed between the half mirror 503 and the half mirror 505. The rotary mirror 507 is disposed on the other side of the adjusting lens 504 with reference to the half mirror 505. The objective lens 508 is used for a range finding. The connection bar 509 is adapted to transmit the movement of the photographing lens system 301 to the rotary mirror 507. Since the structure of the finder 5 is known, detailed description thereof will be omitted.

The camera body 1 has a photometric window (not shown) adapted to measure exposure. A 1/4 inch screw for the use of a general camera tripod is embedded in the base 101. This camera can be counted on a tripod as in a commercially available camera.

(Constitution of Electric System)

The numeral 601 denotes an operation control unit. An input unit 602, a photometric circuit 605, and the photo-interrupters 208a, 208b are connected to the operation control unit 601. The input unit 602 outputs an initialization command signal at the time an electric power source is fed, and has a focusing pbotographing lens system forward switch, a focusing photographing lens system reverse switch, a photometric switch, and a picture-photographing start button, all not shown.

The photometric circuit 605 outputs a photometric signal. The operation control unit 601 drives a DC motor driver 603 in accordance with the initialization command signal. The DC motor driver 603 drives the DC motor 215 in accordance with the initialization command signal.

The DC motor 215 drives the uniaxial stage 203 in a downward direction. By this, the shading element 209 disposed at the uniaxial stage 203 shades the photo-interrupter 208a. When shaded by the shading element 209, the photo-interrupter 208a is actuated (turned on), for example. When the photo-interrupter 208a is actuated, the operation control unit 601 drives the DC motor driver 603. The DC motor driver 603 drives the DC motor 215 such that the uniaxial stage 203 can be moved in an upward direction. The DC motor 215 is activated by coaction of the head 213 and scale 205 of the linear encoder until a secondary scanning origin signal is generated. Upon input of the origin signal, the operation control unit 601 sets the uniaxial stage 203 to the position of origin. That is, an auxiliary servo system is comprised of the linear encoder, a counter, not shown, and the DC motor 205, and the position of origin of the uniaxial stage is maintained.

The operation control unit 601 is then operated to initialize the position of the photographing lens system 301. Upon generation of the secondary scanning origin signal, the operation control unit 601 drives a pulse motor driver 604, which, in turn, drives the pulse motor 303. The pulse motor 303 is activated until the origin switch 306 is actuated. Upon actuation of the origin switch 306, activation of the pulse motor driver 604 is stopped. These initialization may be performed only once when an electric power source is fed. After the initialization, the operation control unit 601 standbys until a signal is input from the input unit 602.

Next, the photographing action mill be described.

A photographing object is looked through the finder 5 and the focusing photographing lens system forward switch is depressed. Then, while the snitch is being depressed, the operation control unit 601 outputs a drive command to the pulse motor driver 604. The pulse motor driver 604 drives the pulse motor 303 so that the photographing lens system 301 would be advanced. The focusing photographing lens system reverse switch is depressed. Then, while the switch is being depressed, the operation control unit 601 drives the pulse motor 303 so that the photographing lens system 301 would be reversed. In this way, by forwarding and reversing the photographing lens system 301 while looking the photographing object through the finder 5, focusing is effected.

Then, when the photometric switch is depressed, the operation control unit 601 outputs a photometric command to the photometric circuit 605. The photometric circuit 605 outputs a photometric information to the operation control unit 601. The operation control unit 601 ouputs an exposure information to the exposure display unit 606 in accordance with the photometric information. A photographer judges whether it is over-exposure, under-exposure, or proper exposure based on the photometric information. The photographer manipulates the diaphragm adjusting dial 405 until exposure becomes proper.

Next, when the photographing start button is depressed, the operation control unit 601 outputs a drive command to the DC motor driver 603. By this, the DC motor 215 is driven. The driving of the DC motor 215 makes it possible to move the uniaxial stage 203. When the uniaxial stage 203 is caused to move, the linear encoder ouputs a pulse. This pulse is input into the CCD driver 607. When the uniaxial stage 203 has moved in the upward direction by a distance equal to the length of one image element of the linear CCD 201, the above pulse in generated. The CCD driver 607 scans the linear CCD 201 in accordance with the pulse. A photoelectric output of the linear CCD 201 is input into a memory 609. The CCD driver 607 simultaneously outputs a clock signal to a memory control circuit 608 in accordance with the pulse. The clock signal establishes connections between each image element and each photoelectric transfer output.

The photoelectric transfer output corresponding each image element of the linear CCD 201 is digitized and stored in each address of the memory 609 one after another. Each address of the memory 609 is designated under the control of the memory control circuit 608. The uniaxial stage 203 is continuously moved. Every time the uniaxial stage 203 is moved by a distance corresponding to the length of one image length of the linear CCD 201, the CCD driver 607 scans the linear CCD 201 once. In this embodiment, in order to obtain an image plane S having an aspect ratio of 1:2, the scanning of the linear CCD 201 is effected 2000 times.

The DC motor 215 is continuously driven even after a picture-photographing is over. However, when the shading plate 209 has reached a position for shading the photo-interrupter 208b, the photo-interrupter 208b is actuated (turned on), for example. By this, the operation control unit 601 outputs a drive stop command to the DC motor driver 603.

When the photo-interrupter 208b is driven, the operation control unit 601 outputs a transfer command to the memory control portion 608. When the transfer command is input into the memory control portion 608, the memory control portion 608 transfers an image information stored in the memory 609 to a memory 610. An image information to be displayed on a monitor 611 is stored in the memory 610. The monitor 611 has an aspect ratio of 500:700 in this embodiment. Accordingly, the image information of the memory control portion 608 is coppressed from 2000:4000 to 500:700 during the time it is transferred from the memory 609 to the memory 610. The compression of the image information of the memory 609 in effected by means of sampling.

The operation control unit 601 causes the monitor 611 acting as a display to display the photographing results. When the transfer command from the input unit 602 to a digital audio tape (hereinafter simply referred to as "DAT") 612 is input into the operation control unit 601, the operation control unit 601 outputs a transfer command of the image information stored in the memory 609 to the memory control portion 208. At the same time, the operation control unit 601 outputs the drive information of the pulse motor 303 to the DAT 612 in order to measure the principal distance. The drive information of the pulse motor 303 and the image information of the memory 609 are recorded in the DAT 612. By this, one picture-photographing is over.

A stereo image can be obtained by photographing an object from several equidistant places. In this embodiment, the drive information (principal distance f) of the pulse motor 303 stored in the DAT 612 and the image information stored in the memory 609 are processed by a processing device not shown.

If a parallax obtained from a correlation among stereo images is represented by P, a base length of stereoscopic view, by b, and a principal distance, by f, a height h of a point of measurement can be obtained from the following equation.

$$h = (b \cdot f)/P$$

Although one embodiment of the present invention has been described, the present invention is not limited to this. Instead, it includes the followings.

(1) A feeder device including the linear guide 302 and the micrometer to be provided with the linear movement mechanism of the photographing lens system 301 may be substituted by a feeder device comprising a cross roller guide and a ball screw, or comprising a guide formed of a flat roller built in a V-groove and a ball screw.

(2) The feeding of the uniaxial state may be arranged such that the linear CCD 201 is provided in a vertical direction and the linear guide 204 is provided in a lateral direction, so that the auxiliary scanning is effected in the lateral direction instead of vertical direction.

Further, the feeder device of the uniaxial stage 203 is not necessarily comprised of a linear guide. Instead, it may employ a cross roller guide, or a guide formed of a flat roller built in a V-groove.

Furthermore, it may employ a structure in which a rotary encoder is directly connected to a ball screw, instead of the use of the encoder.

(3) In this embodiment, the amount of movement of the photographing lens system 301 is measured by counting the number of pulses of the pulse motor 303. However, it may be of a construction in which a linear encoder is mounted on the uniaxial stage 302' and the amount of movement is measured by the linear encoder, or a construction in which a rotary encoder is mounted disposed at a micrometer type feeder mechanism in order to measure the amount of measurement.

Since a camera according to the present invention has the above-mentioned constitution, the position of the principal point is not varied even if focusing is effected. Accordingly, when the camera of the present invention is used for photogrammetry, focusing can be effected without jeopardizing the accuracy of interpretation.

Furthermore, when it is used for photogrammetry, too cameras are not required any more an in the conventional camera. Both long and short range objects can be effected by one camera without trouble.

Moreover, since a picture photographing is effected using the linear CCD, the state of photography can be recognised at that spot site, and errors, if any, can be discovered right after the photographing operation.

In addition, since the image information is recorded in a digital format, interpretation can be effected with ease using digital data.

## Claims

1. A camera including a photographing lens system linear movement mechanism adapted to linearly move a photographing lens system along an optical axis thereof while maintaining its perpendicularity relative to an image plane and restraining variation of position of a principal point which is defined as an intersection point between the optical axis of said photographing lens system and the image plane, a principal distance measuring mechanism adapted to measure a principal distance between said image plane and a principal plane of said photographing lens system, and a photoelectric transfer portion disposed at a photographing portion and adapted to photoelectrically transfer a photographing image and output the same.

2. A camera as claimed in claim 1, wherein said photoelectric transfer portion comprises a linear CCD, an image plane being obtained by moving said linear CCD in an auxiliary scanning direction.

3. A camera as claimed in claim 1 or 2, wherein output of said photoelectric transfer portion is digitized into image date, said camera further including a display portion adapted to display said image data in a compressed format.

4. A camera as claimed in claim 2, wherein said auxiliary scanning direction is a vertical direction.

# FIG.1

PRINCIPAL DISTANCE G

PHOTOGRAPHING
LENS SYSTEM 3

IMAGE PLANE S

PRINCIPAL PLANE K

PRINCIPAL POINT P

O

EP 0 504 037 A2

# FIG.2

# FIG.3

LINEAR CCD — 201

MEMORY (2) — 610

MONITOR — 611

612 — DAT

609 — MEMORY (1)

607 — CCD DRIVER

205

213 — LINEAR ENCODER

608 — MEMORY CONTROL CIRCUIT

601 — OPERATION CONTROL UNIT

602 — INPUT UNIT

215 — DC MOTOR

603 — DC MOTOR DRIVER

208a

208b

604 — PULSE MOTOR DRIVER

303 — PULSE MOTOR

306

605 — PHOTOMETRIC CIRCUIT

606 — EXPOSURE DISPLAY UNIT

EP 0 504 037 A2